# EUROPEAN PATENT APPLICATION

(11) **EP 3 301 637 A1**
(43) Date of publication of application: **04.04.2018**
(21) Application number: 17187581.8
(22) Date of filing: 23.08.2017
(51) Int. Cl.: G06Q 50/12

(54) **ORDER INFORMATION MANAGING DEVICE, METHOD OF MANAGING ORDER INFORMATION, AND COMPUTER READABLE STORAGE MEDIUM**

(30) Priority: 28.09.2016 JP 2016189518; 28.09.2016 JP 2016190289
(71) Applicant: Casio Computer Co., Ltd., Tokyo 151-8543 (JP)
(72) Inventor: TAKAHASHI, Hiroshi, Tokyo, 205-8555 (JP); TOMA, Kazuyoshi, Tokyo, 205-8555 (JP)
(74) Representative: Plougmann Vingtoft a/s

(57) **Abstract**

An order information managing device (10) including: a display controlling member (11) which causes a display (14) to display tables in a table layout screen (200) as selection keys each for selecting each table (S21); a managing member (11) which manages order information from a guest assigned to a table by correlating it with identification information on the table (S14), and manages order information from a guest unassigned to a table by correlating it with identification information indicating that the guest is unassigned to a table; and a controlling member (11) activates a selection key corresponding to a vacant table (S11) and deactivates a rest of selection keys (S11) when correspondence of the order information with the identification information is changed such that the order information from the guest unassigned to a table is managed as the order information from the guest assigned to the table.

## Description

### BACKGROUND OF THE INVENTION

### Field of the Invention

The present invention relates to a device for managing order information, a method thereof, and a computer readable storage medium.

### Description of the Related Art

Heretofore, there has been known an order-data managing system for eating places, such as restaurants, which includes a handy terminal for receiving input from a waitperson on food order information from guests and a kitchen printer for receiving and printing the order information (for example, refer to Japanese Patent Application Laid-Open Publication No. 2006-251956). A cook confirms the printed order information and cooks the ordered items.

In the case where a guest visits an eating place and all tables in the hall are occupied, the waitperson takes a food order from the guest while the guest waits to be seated. After a table becomes vacant and the guest is seated, the waitperson serves the items that have been cooked in advance in accordance with the order. Thus, there is a need for ready change of order information (slip information) on orders from guests waiting to be seated to order information on the orders from the guests after being seated.

There is also a need for confirmation of the progress of services provided by the eating place to guests, such as slip (check) issuance and cooking instructions, to provide smooth service to guests.

### SUMMARY OF THE INVENTION

According to a first aspect of the present invention, there is provided an order information managing device (10) including: a display controlling member (11) which causes a display (14) to display one or more tables in a table layout screen (200) as one or more selection keys each for selection of each of the tables; a managing member (11) which manages order information from a guest assigned to one of the tables by correlating the order information with identification information on the one of the tables to which the guest is assigned (S14), and manages order information from a guest unassigned to any of the tables by correlating the order information with identification information indicating that the guest is unassigned to any of the tables; and a controlling member (11) which performs control to activate a selection key, among the selection keys, corresponding to a vacant table among the tables (S11), and to deactivate a selection key, among the selection keys, corresponding to a rest of the tables (S11), when correspondence of the order information with the identification information is changed such that order information managed by the managing member as the order information from the guest unassigned to any of the tables is managed as the order information from the guest assigned to the one of the tables.

According to a second aspect of the present invention, there is provided a method of managing order information with a device equipped with a display displaying a table layout screen (200), the method comprising the steps of: causing the display to display one or more tables in the table layout screen (200) as one or more selection keys each for selection of each of the tables (S21); managing order information from a guest assigned to one of the tables by correlating the order information with identification information on the one of the tables to which the guest is assigned (S14); correlating order information from a guest unassigned to any of the tables with identification information indicating that the guest is unassigned to any of the tables (S18); and performing control to activate a selection key, among the selection keys, corresponding to a vacant table among the tables (S11), and to deactivate a selection key, among the selection keys, corresponding to a rest of the tables (S11), when correspondence of the order information with the identification information is changed such that the order information from the guest unassigned to any of the tables is managed as the order information from the guest assigned to the one of the tables.

According to a third aspect of the present invention, there is provided a computer readable storage medium storing a program executable by a computer, the program causing the computer controlling a device equipped with a display (14) displaying a table layout screen (200), to conduct the functions of: causing the display to display one or more tables in the table layout screen (200) as one or more selection keys each for selection of each of the tables (S21); managing order information from a guest assigned to one of the tables by correlating the order information with identification information on the one of the tables to which the guest is assigned (S14); correlating order information from a guest unassigned to any of the tables with identification information indicating that the guest is unassigned to any of the tables (S24); and performing control to activate a selection key, among the selection keys, corresponding to a vacant table among the tables (S11), and to deactivate a selection key, among the selection keys, corresponding to a rest of the tables (S11), when correspondence of the order information with the identification information is changed such that the order information from the guest unassigned to any of the tables is managed as the order information from the guest assigned to the one of the tables.

### BRIEF DESCRIPTION OF THE SEVERAL VIEWS OF THE DRAWINGS

Fig. 1 is a block diagram illustrating an order managing system according to an embodiment of the present invention.
Fig. 2 is a block diagram illustrating the functional configuration of a terminal.
Fig. 3A illustrates a configuration of a slip database.
Fig. 3B illustrates a configuration of a detailed slip database.
Fig. 3C illustrates a configuration of a table database.
Fig. 4 is a flow chart illustrating a slip registration process.
Fig. 5A illustrates a first table layout screen in which all tables are vacant.
Fig. 5B illustrates a second table layout screen in which one table is occupied.
Fig. 6A illustrates a third table layout screen in which all tables are occupied.
Fig. 6B illustrates a registration screen.
Fig. 7 illustrates a guest-name input screen.
Fig. 8 is a flow chart illustrating a slip change process.
Fig. 9A illustrates a fourth table layout screen in which one table is vacant.
Fig. 9B illustrates a dummy slip list screen.
Fig. 10A illustrates a slip database after dummy slip change.
Fig. 10B illustrates a detailed slip database after dummy slip change.
Fig. 11 is a block diagram illustrating a functional configuration of a terminal.
Fig. 12A illustrates a configuration of a slip database.
Fig. 12B illustrates a configuration of a detailed slip database.
Fig. 12C illustrates a configuration of a table database.
Fig. 12D illustrates a configuration of a character database.
Fig. 13 is a flow chart illustrating a slip management process.
Fig. 14 is a flow chart illustrating a table layout screen display process.
Fig. 15 illustrates a detailed slip database after a cooking instruction for pending items.
Fig. 16 illustrates a fifth table layout screen.
Fig. 17A illustrates a registration screen for course meals.
Fig. 17B illustrates a sixth table layout screen.
Fig. 18A illustrates a registration screen for dessert.
Fig. 18B illustrates a registration screen for tentative check calculation.
Fig. 19 illustrates a seventh table layout screen.
Fig. 20 illustrates a table indicator including a slip mark.

### DETAILED DESCRIPTION OF THE PREFERRED EMBODIMENTS

Embodiments of the present invention will now be described in detail with reference to the accompanying drawings. The drawings should not be construed to limit the present invention.

### <First Embodiment>

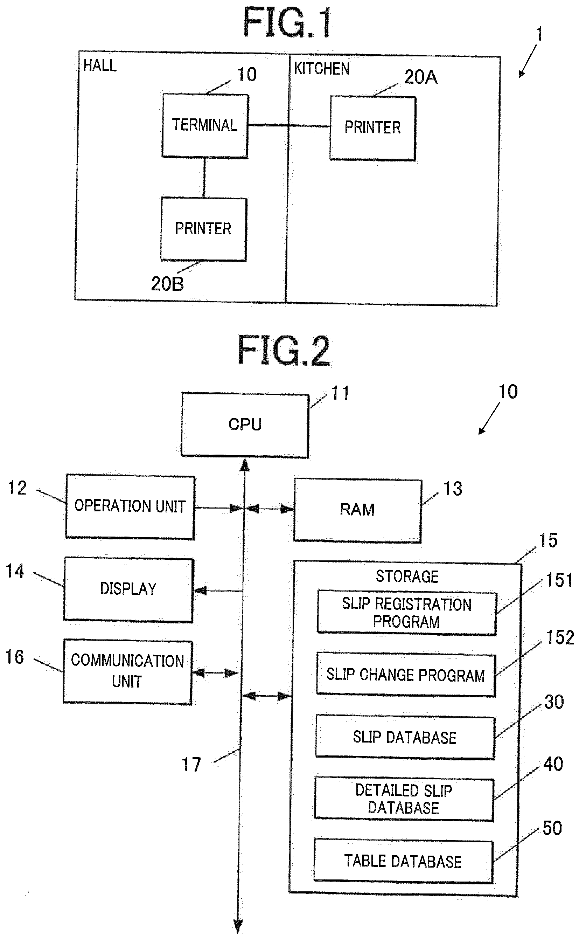

The configuration of the apparatuses/devices in this embodiment will now be described with reference to Figs. 1 and 2. Fig. 1 is a block diagram illustrating an order managing system 1 according to this embodiment. Fig. 2 is a block diagram illustrating the functional configuration of a terminal 10.

The order managing system 1 is disposed in an eating place, such as a restaurant, to receive input of order information on items, such as meals, ordered by guests, manage the order information as slip information, print out the order information in the kitchen to instruct cooking, and print out slips (checks) for check calculation after the guests finish their meals. With reference to Fig. 1, the order managing system 1 includes a terminal 10 as an order-information managing device, and printers 20A and 20B.

An eating place is provided with multiple tables and chairs to be used by guests. The eating place includes a hall that is a main area in which waitpersons move to serve guests and a kitchen that is an area in which cooks prepare items. A terminal 10, which is disposed in the hall, receives input of information from waitpersons, manages various types of information, and sends print instructions to printers 20A and 20B.

The printer 20A is, for example, a thermal printer disposed in the kitchen. The printer 20A mainly prints order information for cooking on a recording medium, such as rolled paper, in response to instructions from the terminal 10. The printer 20B is, for example, a thermal printer disposed in the hall. The printer 20B mainly prints slip information on a recording medium, such as rolled paper, in response to instructions from the terminal 10. The terminal 10 and the printers 20A and 20B are in wire communication with each other. Alternatively, they may be in wireless communication with each other.

The single terminal 10 of the order managing system 1 may be replaced with multiple terminals for different purposes, such as information input and check calculation. The single printer 20A of the order managing system 1 may be replaced with multiple printers for different purposes, such as different courses of the meal (for example, appetizer, main dish, and dessert), depending on the size and/or layout of the kitchen.

With reference to Fig. 2, the terminal 10 includes a central processing unit (CPU) 11 serving as a display controlling member, a managing member, and a controlling member, an operation unit 12, a random access memory (RAM) 13, a display 14, a storage 15, and a communication unit 16. These parts of the terminal 10 are in connection with each other through a bus 17. The CPU 11 may include an arithmetic device, such as a processor.

The CPU 11 controls the parts of the terminal 10. The CPU 11 reads one or more designated programs among the system program and application programs stored in the storage 15, loads the read program(s) in the RAM 13, and executes various processes in cooperation with the loaded program(s).

The operation unit 12 is a touch panel integrated with the display screen of the display 14. The operation unit 12 receives a touch input from an operator (waitperson) and outputs the operational information to the CPU 11.

The RAM 13 is a volatile memory that provides a work area for temporarily storing various Data and programs. The display 14 includes a liquid crystal display (LCD) or an electroluminescent (EL) display and displays various images in accordance with display information sent from the CPU 11.

The storage 15 includes a hard disk drive (HDD), a solid state drive (SSD), or a flash memory. Data and programs can be written in or read out from the storage 15. The storage 15 stores a slip registration program 151, a slip change program 152, a slip database 30, a detailed slip database 40, and a table database 50.

The communication unit 16 is in wire communication with the printers 20A and 20B through cables for information reception/transmission.

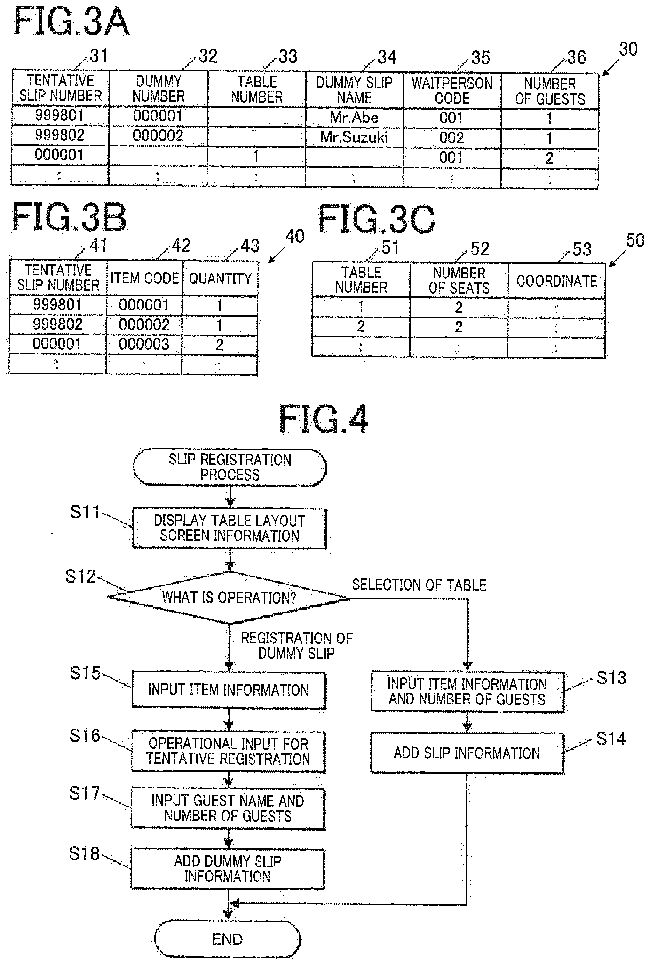

The configurations of the slip database 30, the detailed slip database 40, and the table database 50 stored in the storage 15 will now be described with reference to Figs. 3A to 3C. Fig. 3A illustrates the configuration of the slip database 30. Fig. 3B illustrates the configuration of the detailed slip database 40. Fig. 3C illustrates the configuration of the table database 50.

The slip database 30 is a data table of information on a slip for guests (single guest or group of guests) visiting the eating place. In this embodiment, slips are generated for not only guests seated at tables in the eating place but also guests who are waiting to be seated when all tables in the eating place are occupied. The slips for guests who are not seated at tables but waiting to be seated are referred to as "dummy slips."

With reference to Fig. 3A, the slip database 30 includes the following fields (items): tentative slip number 31; dummy number 32; table number 33; dummy slip name 34; waitperson code 35; and number of guests 36.

The tentative slip number 31 is identification information on slips for tentative check calculation before slip issuance for the menu items. The tentative slip number 31 contains consecutive numbers with a most significant digit other than "9" for usual slips, and consecutive numbers with the most significant digit of "9" for dummy slips. The dummy number 32 contains consecutive numbers corresponding to the dummy slips among the slips in the tentative slip number 31. No parameter is assigned to the dummy number 32 for a usual slip.

The table number 33 is identification information on tables in the eating place occupied by guests corresponding to the respective slips in the tentative slip number 31. The dummy slip name 34 contains the names of the guests of the respective dummy slips in the tentative slip number 31. No parameter is assigned to the dummy slip name 34 for a usual slip. The waitperson code 35 is identification information on waitpersons who serve the guests corresponding to the respective slips in the tentative slip number 31. The number of guests 36 contains the number of guests corresponding to the respective slips in the tentative slip number 31.

The detailed slip database 40 contains details on the slips in the slip database 30. With reference to Fig. 3B, the detailed slip database 40 includes the following fields: tentative slip number 41; item code 42; and quantity 43.

The tentative slip number 41 is identification information similar to that in the tentative slip number 31. The item code 42 is identification information on items provided by the eating place and ordered by the guests corresponding to the slips in the tentative slip number 41, such as a la carte, course meals, or individual dishes (appetizer, main dish, dessert) of the course meals. The quantity 43 contains the quantity of the items in the item code 42.

The records in the slip database 30 and the detailed slip database 40 only include those corresponding to slips of guests who have visited the eating place and have not yet paid for the slips. The terminal 10 instructs the printer 20B to issue slips by printing out the slip information for guest who have finished their meal, in response to operations of the operation unit 12 by waitpersons. The issued slips are handed from the waitpersons to the respective guests. The guests carry the slips to the register where a waitperson carries out check calculation. After the check calculation, the records corresponding to the guests who have paid are deleted from the slip database 30 and the detailed slip database 40.

The table database 50 contains information on the tables in the eating place. With reference to Fig. 3C, the table database 50 includes the following fields: table number 51; number of seats 52; and coordinate 53.

The table number 51 is identification information on all the tables in the eating place. The number of seats 52 contains the number of seats at each table in the table number 51. The coordinate 53 contains positional information on the tables in the table number 51 corresponding to the table layout in the hall displayed in the table layout screen.

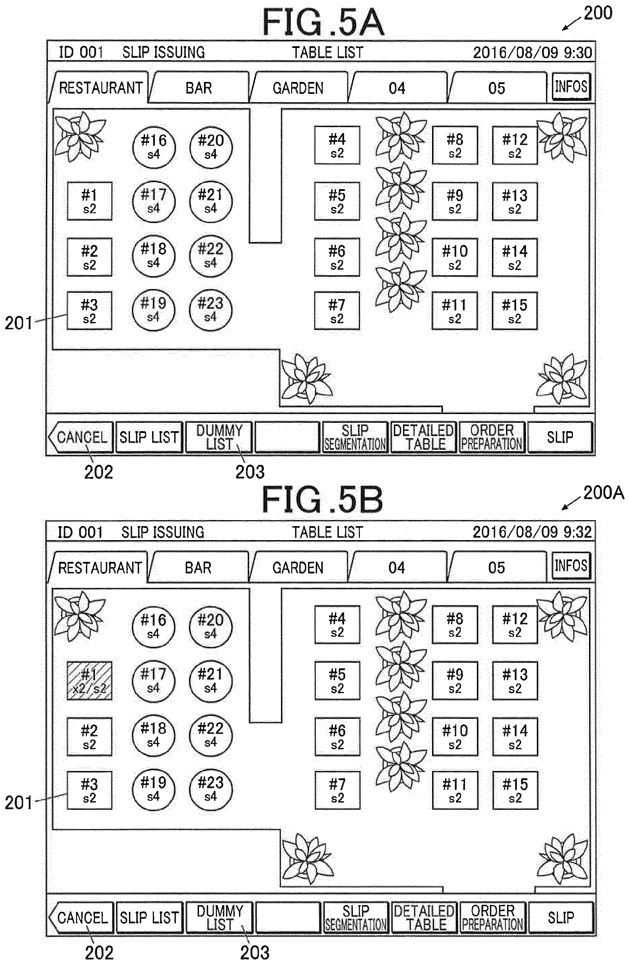

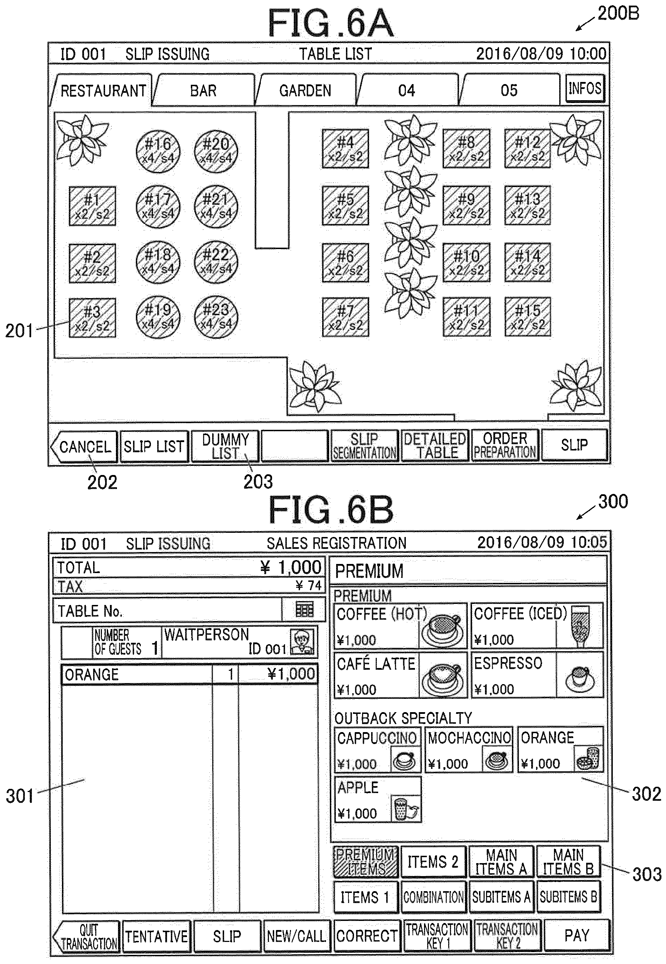

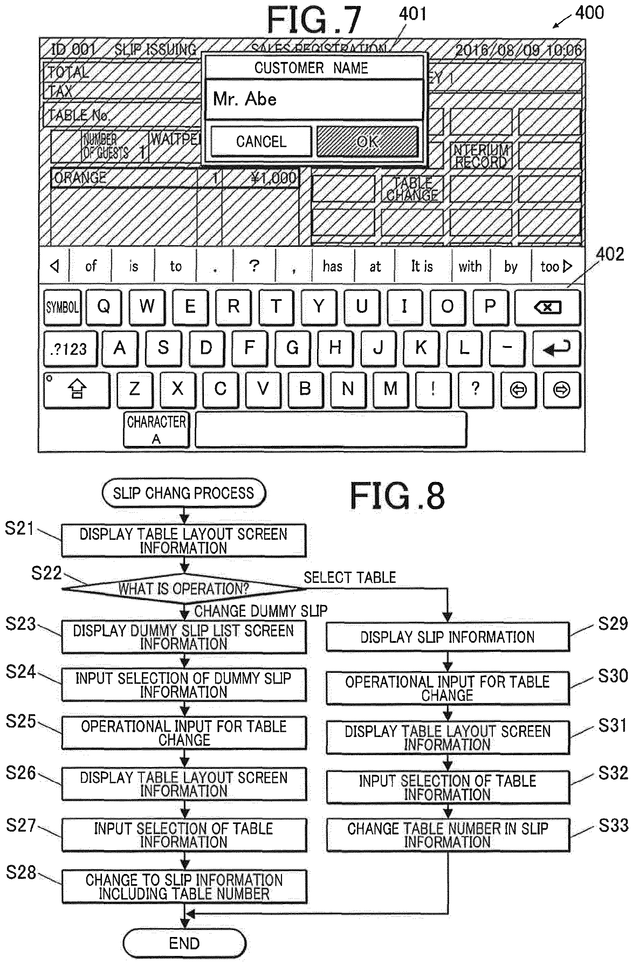

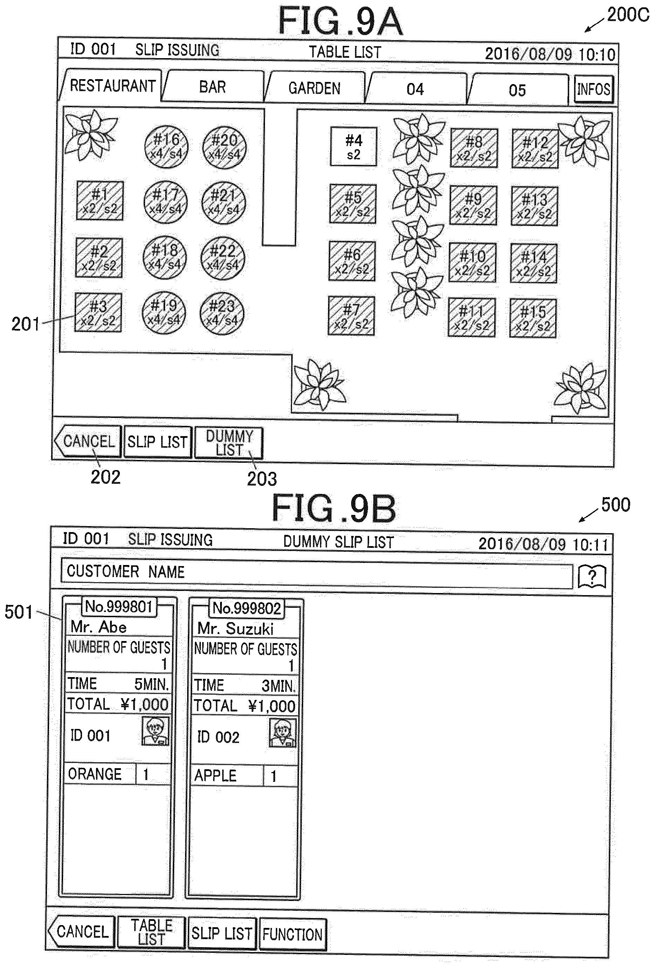

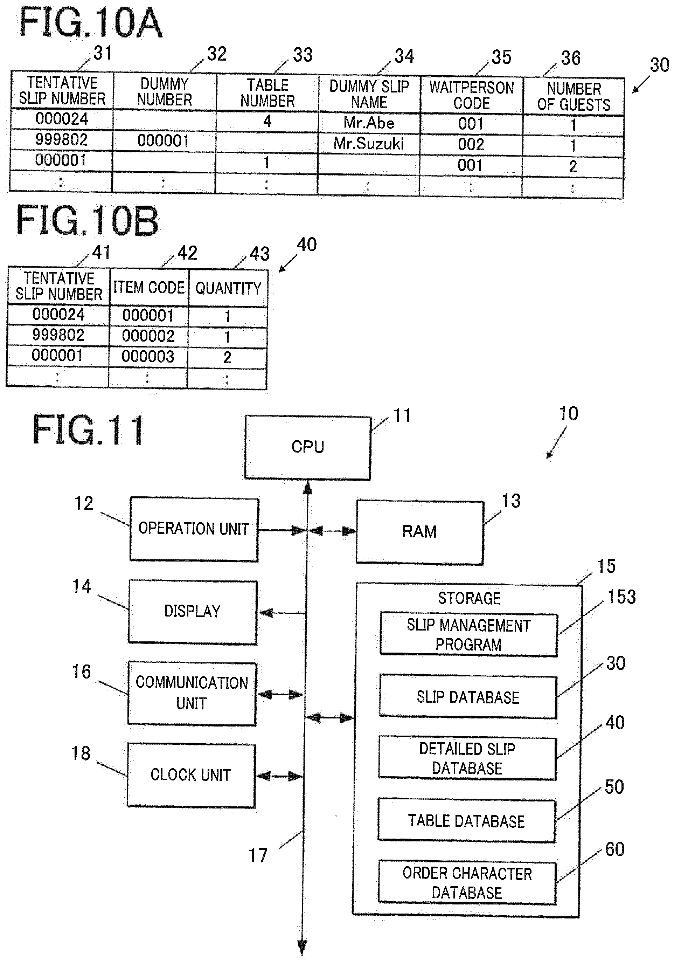

The operation of the order managing system 1 will now be described with reference to Figs. 4 to 10. Fig. 4 is a flow chart illustrating a slip registration process. Fig. 5A illustrates a table layout screen 200 in which all tables are vacant. Fig. 5B illustrates a table layout screen 200A in which one table is occupied. Fig. 6A illustrates a table layout screen 200B in which all tables are occupied. Fig. 6B illustrates a registration screen 300. Fig. 7 illustrates a guest-name input screen 400. Fig. 8 is a flow chart illustrating a slip change process. Fig. 9A illustrates a table layout screen 200C in which one table is vacant. Fig. 9B illustrates a dummy slip list screen 500. Fig. 10A illustrates the slip database 30 after change of a dummy slip. Fig. 10B illustrates the detailed slip database 40 after change of the dummy slip.

The slip registration process carried out by the terminal 10 of the order managing system 1 will now be described. The slip registration process registers slip information on usual slips for guests not waiting to be seated or dummy slips for guests waiting to be seated when all the tables are occupied. In the case where a new guest visits the eating place of which one or more tables are vacant, a waitperson seats the guest and takes an order from the seated guest by asking for the name and the quantity of the items to be ordered. In the case where a new guest visits the eating place of which all tables are occupied, the waitperson takes an order from the guest waiting to be seated by asking for the name of items and the name of the guest. The waitperson then operates the operation unit 12 of the terminal 10 to enter his or her waitperson code.

For example, the instruction for executing the slip registration process inputted by the waitperson via the operation unit 12 of the terminal 10 causes the CPU 11 to read the slip registration program 151 stored in the storage 15, load the read program in the RAM 13, and execute the slip registration process in cooperation with the loaded slip registration program 151.

With reference to Fig. 4, the CPU 11 reads the slip database 30 and the table database 50 from the storage 15, generates table layout screen information based on the slip database 30 and the table database 50, and displays the table layout screen information on the display 14 (Step S11). In the table layout screen information, the tables corresponding to the respective table number 51 on every record are disposed, with the table numbers 51, the numbers of seats 52, the numbers of seated guests 36 included therein, at positions corresponding to the coordinates 53 in the hall. A table(s) with a table number(s) 33 is set at "occupied."

The table layout screen 200 illustrated in Fig. 5A is an example table layout screen based on the table layout screen information. The table layout screen 200 includes table indicators 201 corresponding to all tables disposed in the hall in accordance with a predetermined layout. Each table indicator 201 functions as a selection key that receives touch input for selection of the corresponding table. Each table indicator 201 includes a table number (#+table number), the number of guests seated at the table (x+number of guests), and the number of seats at the table (s+number of seats). The color of the table indicators 201 indicates the state of the tables: gray indicates occupied tables and white indicates vacant tables. For example, all the table indicators 201 in the table layout screen 200 are white, indicating that the tables are vacant.

The table layout screen 200 includes a cancel button 202 and a dummy list button 203. The cancel button 202 is operated to shift to a registration screen of items ordered by a guest waiting to be seated, as described below. The dummy list button 203 is operated to shift to a dummy slip list screen including slip information on dummy slips, which are described below.

To prepare usual slip information of a new guest not waiting to be seated, the table indicator 201 corresponding to the vacant table is touched for input. To prepare slip information on a dummy slip for a guest waiting to be seated, the cancel button 202 is touched for input.

The waitperson operates the operation unit 12 to select a table indicator 201 corresponding to the table to which the guest is to be seated or the cancel button 202. The CPU 11 receives the input from the table indicator 201 or the cancel button 202 and determines the content of the input operation (step S12). In step S12, the table indicator 201 to which the guest is to be seated is selected through touch input, where only the table indicator 201 corresponding to the vacant table is activated and the other table indicators 201 are deactivated.

In response to selection of the table to which the guest is to be seated through selection of the relevant table indicator 201 (step S12; table selection), the CPU 11 generates registration screen information on the ordered items, displays this information on the display 14, and receives an input from the waitperson via the operation unit 12 about information on the items ordered by the guests seated at the table selected in step S12 and the number of guests (step S13). In step S13, a registration screen similar to the registration screen 300 described below is displayed to receive input of the item codes of the ordered items and the quantity; and a number of guests indicator (not shown) is displayed to receive input of the number of guests.

The CPU 11 generates a unique tentative slip number for a usual slip, adds the generated tentative slip number, the table number of the table selected in step S12, the item information (item codes, quantity) and the number of guests inputted in step S13, and the preliminarily inputted waitperson code to the slip database 30 and the detailed slip database 40 in the storage 15 with (step S14). The CPU 11 then ends the slip registration process. In step S14, the generated tentative slip number, the inputted table number, the item codes, the quantity, the number of guests, and the waitperson code are respectively assigned to the fields of a single record, i.e., the fields of the tentative slip number 31 and 41, the table number 33, the item code 42, the quantity 43, the number of guests 36, and the waitperson code 35, as in the record corresponding to 000001 in the tentative slip number 31 in the slip database 30 illustrated in Fig. 3A, for example.

In response to an operation of the cancel button 202 to select dummy slip registration (step S12; dummy slip registration), the CPU 11 generates the registration screen of the ordered items, displays the registration screen on the display 14, and receives an input from the waitperson via the operation unit 12 about information on the items ordered by the guests (step S15). In step S15, the registration screen 300 illustrated in Fig. 6B is displayed, for example.

The registration screen 300 includes an item list indicator 301 and an item input unit 302. The item list indicator 301 displays a list of item information (item codes, quantity) on the selected items. The item input unit 302 includes multiple item buttons for selection of items and receives input of the item information. The registration screen 300 includes switch buttons 303 that are operated to change the buttons in the item input unit 302.

The CPU 11 receives an operation for tentative registration of the slip information (registration of the dummy slip information) from the waitperson via the operation unit 12 (step S16). The CPU 11 generates a guest-name input screen for receiving an input of the name of the guest waiting to be seated (guest name), displays this screen on the display 14, and receives an input of the guest name and the number of guests from the waitperson via the operation unit 12 (step S17).

The guest-name input screen 400 includes a guest-name window 401 and a character input unit 402. The guest-name window 401 displays the input guest name and includes buttons for entering or cancelling the input of the guest name. The character input unit 402 includes various character input buttons. The guest-name input screen 400 displays a number of guests window (not shown) after the guest name is inputted to receive an input of the number of guests waiting to be seated.

The CPU 11 generates a unique tentative slip number for the dummy slip and a dummy number corresponding to the number of guests waiting to be seated and adds the generated tentative slip number and dummy number, the item information (item codes, quantity) inputted in step S15, the guest name and the number of guests inputted in step S17, and the waitperson code inputted in advance to the slip database 30 and the detailed slip database 40 in the storage 15 (step S18). The CPU 11 then ends the slip registration process. The generated tentative slip number, the inputted item code, the quantity, the guest name, the number of guests, and the waitperson code are respectively assigned to the fields of a single record, i.e., the tentative slip numbers 31 and 41, the item code 42, the quantity 43, the dummy slip name 34, the number of guests 36, and the waitperson code 35.

The slip registration process will now be described by specific examples. Two new guests visit the eating place when all tables are vacant. The waitperson seats the guests to a table corresponding to table number "1" and acquires item information by taking orders from the guests. The slip registration process is then carried out. In step S11, the table layout screen 200 indicating all tables being vacant is displayed, as illustrated in Fig. 5A. In step S12, the table indicator 201 corresponding to table number "1" is selected by touch input.

In step S13, the item information on the ordered items and the number of guests (=2) are input. In step S14, the record of the slip information corresponding to a usual slip for the two guests is added to the slip database 30 and the detailed slip database 40. For example, the record added is the same as that illustrated in Figs. 3A and 3B containing "000001" in the tentative slip numbers 31 and 41.

Since the guests are seated at the table corresponding to table number "1," the table layout screen 200A displayed in step S11 of the next slip registration process includes a table indicator 201 of the table corresponding to table number "1" colored in gray, as illustrated in Fig. 5B. The slip registration process is repeated to register the slip information on new guests seated at tables until all tables are occupied by guests.

Then, a new guest "Mr. Abe" visits the eating place and waits to be seated because all tables are occupied. The waitperson acquires the item information on the items ordered by this guest and the name of this guest. The slip registration process is then carried out. In step S11, a table layout screen 200B is displayed in which all tables are occupied, as illustrated in Fig. 6A. In step S12, the cancel button 202 is touched for input.

In step S15, the registration screen 300 illustrated in Fig. 6B is displayed to receive an input of the item information on the ordered item (orange, quantity = 1) and the number of guests (=1). In step S17, the guest-name input screen 400 illustrated in Fig. 7 is displayed to receive an input of the name (Mr. Abe) of the guest. In step S18, the record of the slip information corresponding to a dummy slip for the guest is added to the slip database 30 and the detailed slip database 40. For example, the record added is the same as that illustrated in Figs. 3A and 3B containing "999801" in the tentative slip numbers 31 and 41.

Similarly, a new guest "Mr. Suzuki" visits the eating place when all tables are occupied. In such a case, the record added to the slip database 30 and the detailed slip database 40 through steps S11, S12, and S15 to S18 of the slip registration process is the same as that illustrated in Figs. 3A and 3B containing "999802" in the tentative slip numbers 31 and 41.

The slip change process carried out by the terminal 10 of the order managing system 1 will now be described. The slip change process changes the slip information on a dummy slip after a guest who had been waiting for a seat is seated or the slip information for a guest reseated to another table. If a guest is waiting to be seated and a table becomes vacant, the waitperson directs the guest to the vacant seat. If a seated guest makes a request to be reseated, the waitperson directs the guest from the original table to a destination table.

For example, the instruction for executing the slip change process inputted by the waitperson via the operation unit 12 of the terminal 10 causes the CPU 11 to read the slip change program 152 stored in the storage 15, load the read program in the RAM 13, and execute the slip change process in cooperation with the loaded slip change program 152.

With reference to Fig. 8, the CPU 11 reads the slip database 30 and the table database 50 from the storage 15, generates table layout screen information based on the slip database 30 and the table database 50, and displays the table layout screen information on the display 14 (Step S21). The table layout screen 200C illustrated in Fig. 9A is an example table layout screen based on the table layout screen information. In the table layout screen 200C, the table indicator 201 corresponding to table number "4" (#4) is vacant and colored in white. The tables corresponding to the other table indicators 201 are occupied and colored in gray.

The dummy list button 203 is operated by touch input when the guest waiting to be seated is to be directed to a table. In the case where a guest is reseated to another table, the table indicator 201 corresponding to the original table is operated by touch input.

The waitperson operates the operation unit 12 to select the table indicator 201 corresponding to the original table or the dummy list button 203. The CPU 11 receives the input from the table indicator 201 or the dummy list button 203 and determines the content of the input operation (step S22). In step S22, the table indicator 201 corresponding to the original table is selected through touch input, where only the table indicators 201 corresponding to occupied tables are activated and the other table indicators 201 are deactivated. In response to an instruction for dummy slip change through selection of the dummy list button 203 (step S22; dummy slip change), the CPU 11 reads the slip database 30 and the detailed slip database 40 stored in the storage 15, generates dummy slip list screen information indicating a list of slip information for the guests receiving issuance of dummy slips (the first digit of the parameters in the tentative slip numbers 31 and 41 is "9," a parameter is assigned to the dummy number 32, or a parameter is not assigned to the table number 33) on the basis of the slip database 30 and the detailed slip database 40, and displays the dummy slip list screen information on the display 14 (step S23). The dummy slip list screen 500 illustrated in Fig. 9B is an example dummy slip list screen based on the dummy slip list screen information.

The dummy slip list screen 500 includes dummy slip information windows 501 for the respective dummy slips. A dummy slip information window 501 is provided for every tentative slip number 31 (41). The dummy slip information window 501 receives touch inputs of selection and includes the dummy slip name (guest name) 34, the waitperson code 35, the number of guests 36, the item code 42 of the ordered items, and the quantity 43. The dummy slip information window 501 may also include the time from slip information registration of the dummy slip, as shown in FIG. 9B.

The CPU 11 receives the touch input of selection of the dummy slip information window 501 by the waitperson via the operation unit 12 (step S24). The CPU 11 receives the operation for table change to a destination table (change of slip information on dummy slip) from the waitperson via the operation unit 12 (step S25). The CPU 11 reads the slip database 30 and the table database 50 from the storage 15, generates table layout screen information based on the slip database 30 and the table database 50, and displays the table layout screen information on the display 14 (step S26).

The CPU 11 receives the touch input of selection of the table indicator 201 as the destination table by the waitperson via the operation unit 12 (step S27). In step S27, the touch input is activated only for the table indicators 201 corresponding to vacant tables and deactivated for the other table indicators 201. The CPU 11 generates a unique tentative slip number of a usual slip, changes the record in the tentative slip numbers 31 and 41 corresponding to the dummy slip information window 501 selected in step S24 in the slip database 30 and the detailed slip database 40 in the storage 15 with the generated tentative slip number and the table number corresponding to the table selected in step S27 (step S28). The CPU 11 then ends the slip change process. The parameters of the tentative slip numbers 31 and 41 inputted in step S24 and the parameter of the table number 33 are changed with the generated tentative slip number and the inputted table number, respectively; the parameters of the dummy number 32 are deleted (no parameter is assigned); and parameters are reassigned to the dummy numbers 32 of all records to which dummy numbers have been already assigned.

Steps S21 to S28 of the slip change process will now be described through specific examples. The table corresponding to table number "4" becomes vacant while the slip database 30 and the detailed slip database 40 illustrated in Figs. 3A and 3B are stored. The waitperson seats guest "Mr. Abe" who has been waiting to be seated at the table corresponding to table number "4." The slip change process is then carried out.

In step S21, the table layout screen 200C illustrated in Fig. 9A is displayed. In step S22, the dummy list button 203 is operated. In step S23, the dummy slip list screen 500 illustrated in Fig. 9B is displayed. The dummy slip list screen 500 includes dummy slip information windows 501 for guest "Mr. Abe" and guest "Mr. Suzuki." In step S24, the dummy slip information window 501 of guest "Mr. Abe" is selected by touch input.

In step S26, the table layout screen 200C illustrated in Fig. 9A is displayed. In step S27, the table indicator 201 of the table corresponding to table number "4," which is the destination table, is selected by touch input. In step S28, the slip database 30 and the detailed slip database 40 illustrated in Figs. 3A and 3B are changed to the slip database 30 and the detailed slip database 40 illustrated in Figs. 10A and 10B, respectively. In the record for guest "Mr. Abe," the parameters of the tentative slip numbers 31 and 41 are changed to "000024" for a usual slip, the parameter in the dummy number 32 is deleted, the parameter "4" is assigned to the table number 33, and the parameter "000001" is reassigned to the dummy number 32 of guest "Mr. Suzuki."

The table layout screen displayed in step S21 and other steps of a subsequent slip change process, for example, is the same as the table layout screen 200B illustrated in Fig. 6A, except that the number of guests in the table indicator 201 of the table corresponding to table number "4" is "1." The dummy slip list screen displayed in step S23 and other steps of a subsequent slip change process, for example, is the same as the dummy slip list screen 500 illustrated in Fig. 9B, except that the dummy slip information window 501 of guest "Mr. Abe" who has been seated is deleted and only the dummy slip information window 501 of guest "Mr. Suzuki" is displayed.

Referring back to Fig. 8, in response to selection of a table through selection of the table indicator 201 (step S22; table selection), the CPU 11 reads the slip database 30 and the detailed slip database 40 from the storage 15 and displays the slip information on the record of the slip database 30 and the detailed slip database 40 corresponding to the table number 33 to which the parameter is assigned in step S22, on the display 14 (step S29). The CPU 11 receives the operation for the table change from the waitperson via the operation unit 12 (step S30).

The CPU 11 reads the slip database 30 and the table database 50 from the storage 15, generates the table layout screen information based on the slip database 30 and the table database 50, and displays the table layout screen information on the display 14 (step S31). The CPU 11 receives the touch input of selection of the table indicator 201 of the destination table by the waitperson via the operation unit 12 (step S32). In step S32, the touch input is activated only for the table indicators 201 corresponding to vacant tables and deactivated for the other table indicators 201. The CPU 11 changes the table number 33 in the slip database 30 in the storage 15 corresponding to the tentative slip number 31 acquired in step S29 to the table number of the table selected in step S32 (step S33). The CPU 11 then ends the slip change process.

According to this embodiment, the terminal 10 displays tables indicators 201 corresponding to tables in a table layout screen for selection of the respective table indicators 201; manages order information from a guest assigned to one of the tables in connection with identification information (table number 33) on the table to which the guest is assigned; correlating order information from a guest unassigned to a table with identification information (tentative slip number 31, 41, dummy number 32, table number 33) indicating that the guest is unassigned to a table; and activates the table indicator 201 corresponding to a vacant table and deactivates the table indicators 201 corresponding to the other tables at the same time when the identification information correlated with the order information from a guest unassigned to a table is changed to identification information correlated with the order information from the guest assigned to the selected table.

In the case where the order information (dummy slip information window 501) on a guest unassigned to a table is selected and a vacant table corresponding to one of the table indicators 201 is selected, the terminal 10 changes the correspondence of the order information with the identification information such that the selected order information from a guest unassigned to a table is managed as order information from the guest assigned to the selected table.

Thus, the waitperson can readily and visually confirm the layout and vacancy of the tables in the eating place on the displayed table layout screen and readily select a destination table with the table indicator 201 in the table layout screen. Thus, the order information (slip database 30, detailed slip database 40) from a guest unassigned to a table (not seated) can be readily and accurately changed to order information from the guest assigned to a table (seated) after the guest is seated.

The terminal 10 displays a list of order information (dummy slip list screen 500) from guests unassigned to tables. Thus, the list of order information on guests unassigned to tables allows the waitperson to readily and visually confirm the order information from multiple guests unassigned to tables and readily select the guest(s) (the order information of the guest(s)) to be changed after the guest is seated.

In the case where the identification information correlated with the selected order information from a guest unassigned to a table is changed to identification information correlated with order information from the guest assigned to the selected table, the terminal 10 deletes the order information from the guest unassigned to the selected table from the list. Thus, the order information from a guest assigned to a table can be prevented from being selected for assignment and the order information from a guest unassigned can be certainly selected.

In the case where the order information from a guest assigned to a table contains the tentative slip number 31 (41) of a usual slip, the order information from a guest unassigned to a table contains the tentative slip number 31 (41) of a dummy slip, and the identification information correlated with the order information from a guest unassigned to a table is changed to identification information correlated with order information from a guest assigned to the selected table, the terminal 10 changes the tentative slip number 31 (41) of a dummy slip to the tentative slip number 31 (41) of a usual slip. Thus, the slip number of the order information from a guest assigned to a table can be managed as the tentative slip number 31 (41) of a usual slip after the guest is assigned to a table.

In the case where the order information from a guest assigned to a table is selected through selection of the table indicator 201 corresponding to the original table and a vacant table among the table indicators 201 corresponding to destination tables is selected, the terminal 10 changes the correspondence of the order information with the identification information (table number 33) such that the selected order information from a guest assigned to the original table is managed as order information from the guest assigned to another selected table. Thus, the order information from a guest assigned to an original table can be readily selected, a vacant destination table can be readily selected, and the order information from the guest can be readily and appropriately changed in accordance with the guest reseating to another table.

As described above, the storage 15 as the computer readable medium for a program according to the present invention is exemplified by an HDD, an SSD, or a flash memory. Alternatively, any other computer readable medium may be used. Other computer readable media include a portable recording medium, such as a CD-ROM. Carrier waves may also be applied to the present invention as a medium that provides data of the program according to the present invention via a communication line.

The embodiments described above should not be construed to limit the order information managing device, the method of managing order information, and the computer readable storage medium according to the present invention.

In the embodiments described above, the slip information on a slip of an unseated guest waiting to be seated after visiting the eating place in which all tables are occupied is registered as slip information on a dummy slip, for example. The present invention, however, should not be limited thereto. For example, the slip information on a dummy slip may be registered for a guest who visits the eating place, orders items, joins a friend seated at a fully occupied table, and eats the ordered items while standing, for example.

According to the embodiments described above, the order managing system 1 includes a terminal 10 installed in an eating place that is directly operated by a waitperson to output and input information. The present invention should not be limited to this configuration. For example, the embodiments described above may be applied to an order entry system including a wireless communication server, such as a terminal 10, and a handy terminal carried by a waitperson. The waitperson operates the handy terminal to output and input information.

The detailed configuration and operation of the components of the order managing system 1 according to the embodiments described above may be appropriately modified without departing from the scope of the present invention.

The embodiments described above should not be construed to limit the present invention, and the claims and other equivalents thereof are included in the scope of the invention.

### <Second Embodiment>

With reference to Fig. 11, a terminal 10 includes a central processing unit (CPU) 11 serving as a display controlling member, a slip issuing member, an instruction information issuing member, and a determining member, an operation unit 12, a random access memory (RAM) 13, a display 14, a storage 15, a communication unit 16, and a clock unit 18. These parts of the terminal 10 are in connection with each other through a bus 17.

The storage 15 is composed of a hard disk drive (HDD), a solid state drive (SSD), or a flash memory. Data and programs can be written in or read out from the storage 15. The storage 15 differs from that in the terminal 10 illustrated in Fig. 2 in that it stores an order character database 60 besides a slip management program 153, a slip database 30, a detailed slip database 40, and a table database 50.

The clock unit 18 is a real-time clock that counts the current date and time and outputs current date and time information to the CPU 11.

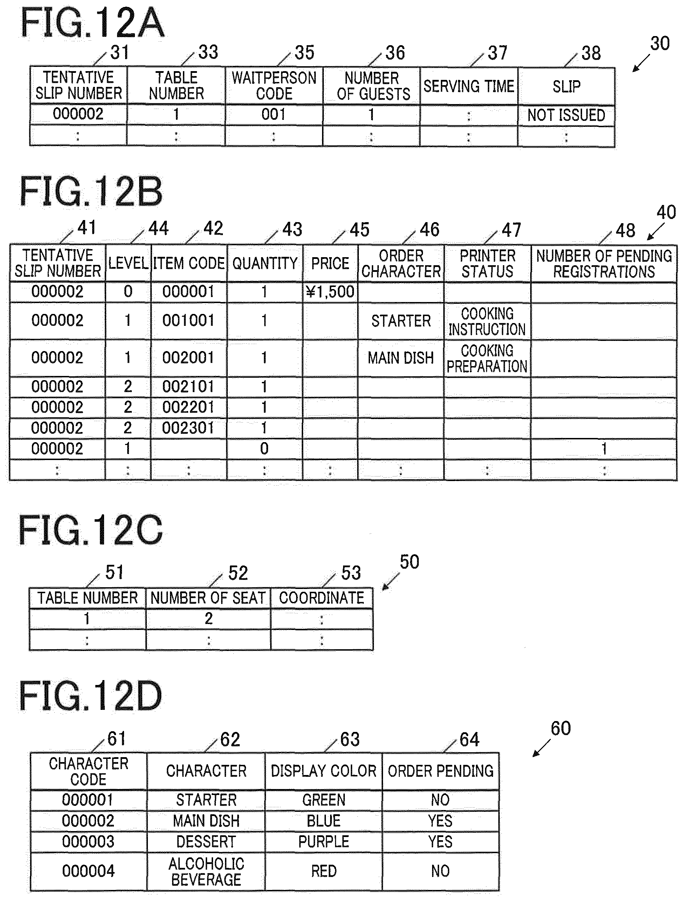

The configurations of the slip database 30, the detailed slip database 40, the table database 50, and the order character database 60 stored in the storage 15 will now be described with reference to Figs. 12A to 12D. Fig. 12A illustrates the configuration of the slip database 30. Fig. 12B illustrates the configuration of the detailed slip database 40. Fig. 12C illustrates the configuration of the table database 50. Fig. 12D illustrates the configuration of the order character database 60.

The slip database 30 is a data table of information on slips for respective guests (single guests or groups of guests) visiting the eating place. With reference to Fig. 12A, the slip database 30 includes the following fields (items): tentative slip number 31; table number 33; waitperson code 35; number of guests 36; serving time 37; and slip 38.

The tentative slip number 31 is identification information on slips for tentative check calculation until the actual check calculation. The table number 33 is identification information on tables in the eating place occupied by guests corresponding to the respective slips in the tentative slip number 31. The waitperson code 35 is identification information on waitpersons who serve the guests corresponding to the respective slips in the tentative slip number 31. The number of guests 36 contains the number of guests corresponding to the respective slips in the tentative slip number 31. The serving time 37 contains information on the dates and times of the last service (order taking) provided by waitpersons to guests corresponding to the respective slips in the tentative slip number 31. The serving time 37 may contain any other information, such as the dates and times of the first service provided by the waitpersons to the guests. The slip 38 contains information indicating whether slips corresponding to the respective slips in the tentative slip number 31 are issued (printed).

The detailed slip database 40 contains details on the slips in the slip database 30. With reference to Fig. 12B, the detailed slip database 40 includes the following fields: tentative slip number 41; level 44; item code 42; quantity 43; price 45; order character 46; printer status 47; and pending registration number 48.

The tentative slip number 41 is identification information similar to that in the tentative slip number 31. The level 44 contains information on the level of the course meals ordered by the guests corresponding to the respective slips in the tentative slip number 41. For example, a "three-course lunch" is a course meal including three dishes: an appetizer, a main dish, and a dessert. A guest can select an appetizer, a main dish, and a dessert from corresponding groups of items. For example, the dessert may be selected from apple pie, sherbet, and cream parfait. The appetizer, the main dish, and the dessert are referred to as "course items." If the guest selects a sirloin steak for the main dish, the guest can also select the degree of doneness (e.g., rare), side dish (e.g., potatoes), and sauce (e.g., ketchup) from corresponding groups of items. The items of the doneness, side dish, and sauce are referred to as "modifying items" of the course items. In such a case, the level of the course meal is "0"; the level of the course item is "1," which is one level lower than course meal; and the level of the modifying item is "2," which is one level lower than course item. In a strict definition, a "course meal" includes multiple dishes that are served in a predetermined order, whereas a "set meal" includes multiple dishes served in no particular order. In this embodiment, course meals and set meals are collectively referred to as "course meals."

The item code 42 is identification information on items provided by the eating place and ordered by the guests corresponding to the respective slips in the tentative slip number 41, such as a la carte, course meals, or the individual dishes (appetizer, main dish, dessert) of the course meals. The quantity 43 contains the quantity of the items in the item code 42. The price 45 contains the prices of the items in the item code 42. The order character 46 contains the name of the character (type) of items among the items in the item code 42 in units of cooking instructions. The order character 46 contains parameters corresponding to "appetizer," "main dish," and "dessert," for example.

The printer status 47 contains information on the contents of print instructions relevant to the cooking of the items in the item code 42. The printer status 47 contains the parameter "cooking preparation" or "cooking instruction." "Cooking preparation" indicates that a print instruction has been sent to the printer 20A to print out the order information including the content of the instruction for cooking preparation, such as collection of ingredients and preparation of the cooking, for the items in the item code 42. "Cooking instruction" indicates that a print instruction has been sent to the printer 20A to print out the order information including the content of the instruction for cooking the items in the item code 42. The pending registration number 48 indicates the number of pending orders of key items of course menus, which is assigned "0" in the level 44. For example, in the case where two guests corresponding to the slip in the tentative slip number 41 each have ordered an appetizer and a main dish of a "three-course lunch" but the order of a dessert is on hold, "2" is assigned to the pending registration number 48 in the record of the dessert.

The records in the slip database 30 and the detailed slip database 40 are only for slips corresponding to guests who are in the eating place and have not yet paid. After a guest finishes eating, the waitperson operates the operation unit 12 to instruct the terminal 10 to send slip information to the printer 20B to print out a slip. The issued slip is handed from the waitperson to the relevant guest. The guest brings the slip to the register where a waitperson carries out check calculation. After the check calculation, the record corresponding to the guest who has paid is deleted from the slip database 30 and the detailed slip database 40.

The table database 50 contains information on the tables in the eating place. With reference to Fig. 12C, the table database 50 includes the following fields: table number 51; number of seats 52; and coordinate 53.

The table number 51 is identification information on all the tables in the eating place. The number of seats 52 contains the number of seats at each table in the table number 51. The coordinate 53 contains positional information on the tables in the table number 51 corresponding to the table layout in the hall displayed in the table layout screen.

The order character database 60 contains definition information on the character name of the dishes constituting the course meal. With reference to Fig. 12D, the order character database 60 includes the following fields: character code 61; character 62; display color 63; and order pending 64.

The character code 61 is identification information on characters of the dishes constituting the course meal. The character 62 contains the name of the character in the character code 61. The display color 63 contains the display color of letters of the characters in the character code 61. The order pending 64 contains information on whether "cooking preparation" or "cooking instruction" is assigned to the printer status 47 (whether order preparation (cooking execution instruction) is required) when tentative check calculation is carried out for the items corresponding to the characters in the character code 61. If "NO" is assigned to the order pending 64, "cooking instruction" is assigned to the printer status 47 upon tentative check calculation of the registered item corresponding to the character in the character code 61. If "YES" is assigned to the order pending 64, "cooking preparation" is assigned to the printer status 47 upon tentative check calculation of the registered item corresponding to the character in the character code 61. For example, "NO" is assigned to the order pending 64 for appetizers because the appetizers are the first items served and should be served without order preparation (cooking instruction). For example, "YES" is assigned to the order pending 64 for main dishes and desserts because these items are served not at the beginning and at timings depending on the eating pace of the guests and require order preparation.

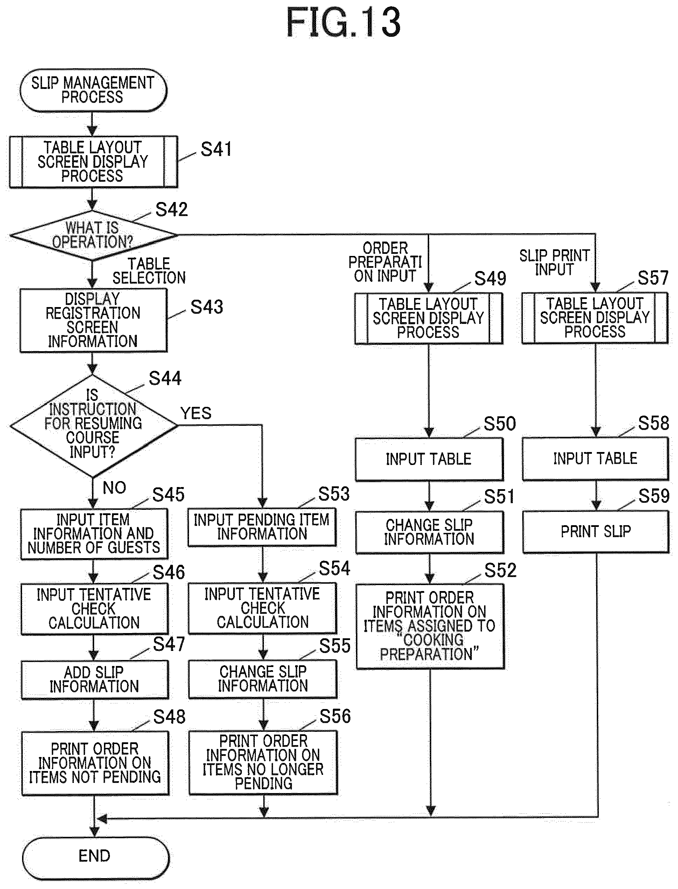

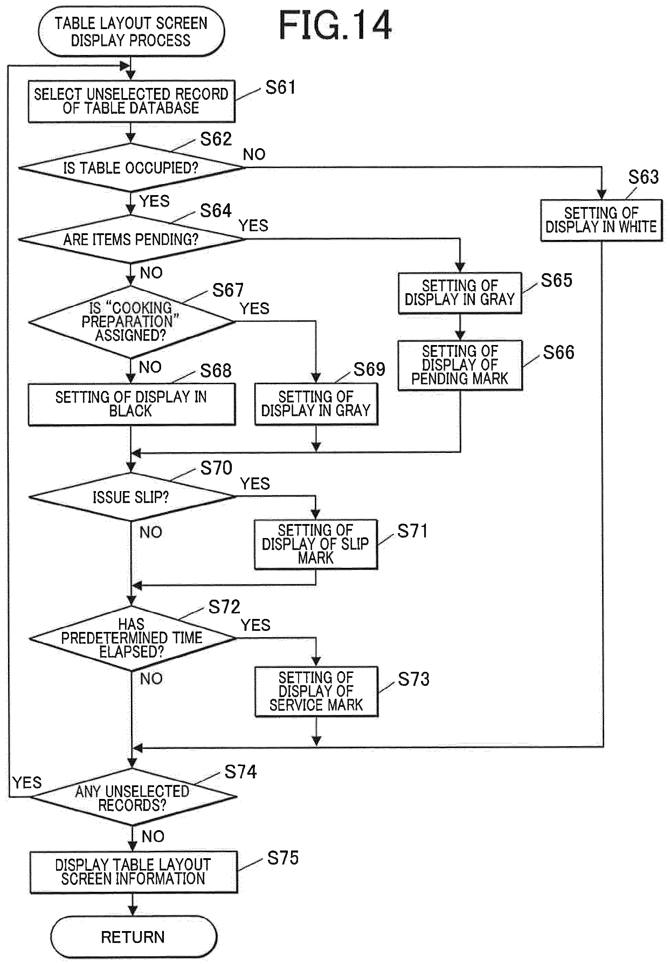

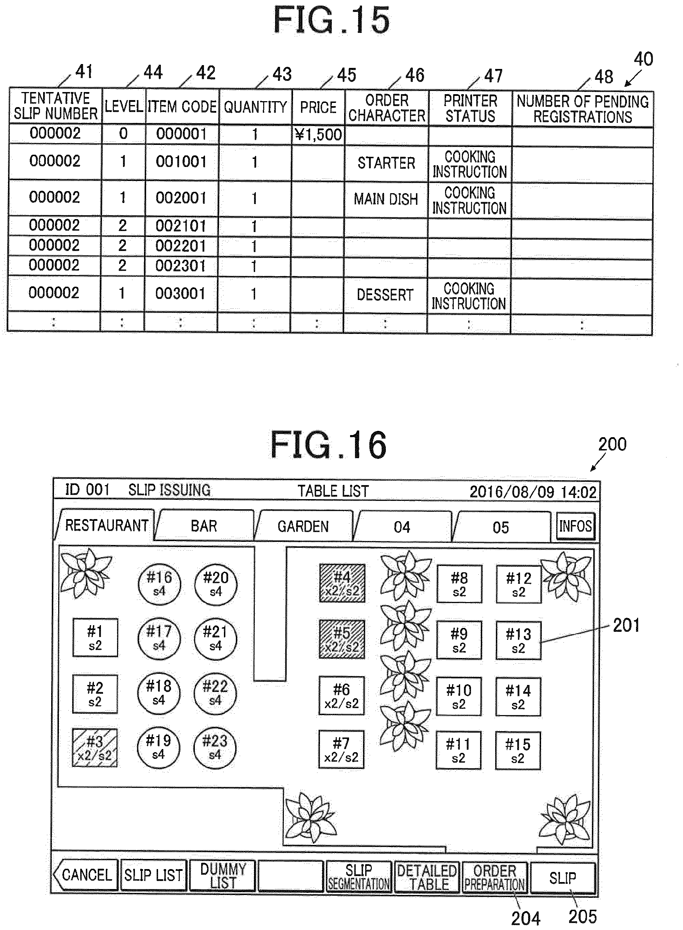

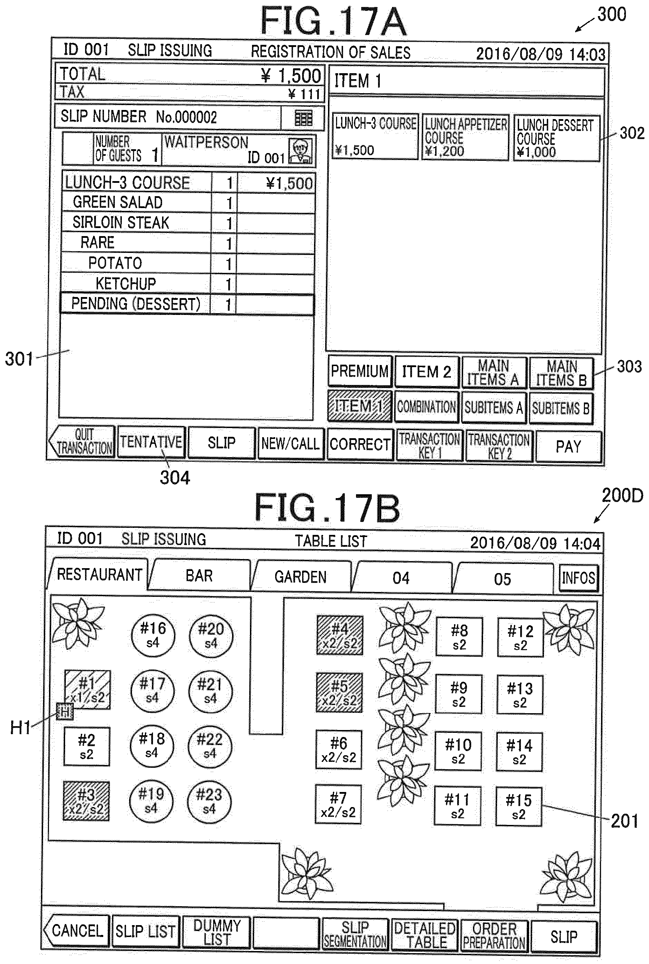

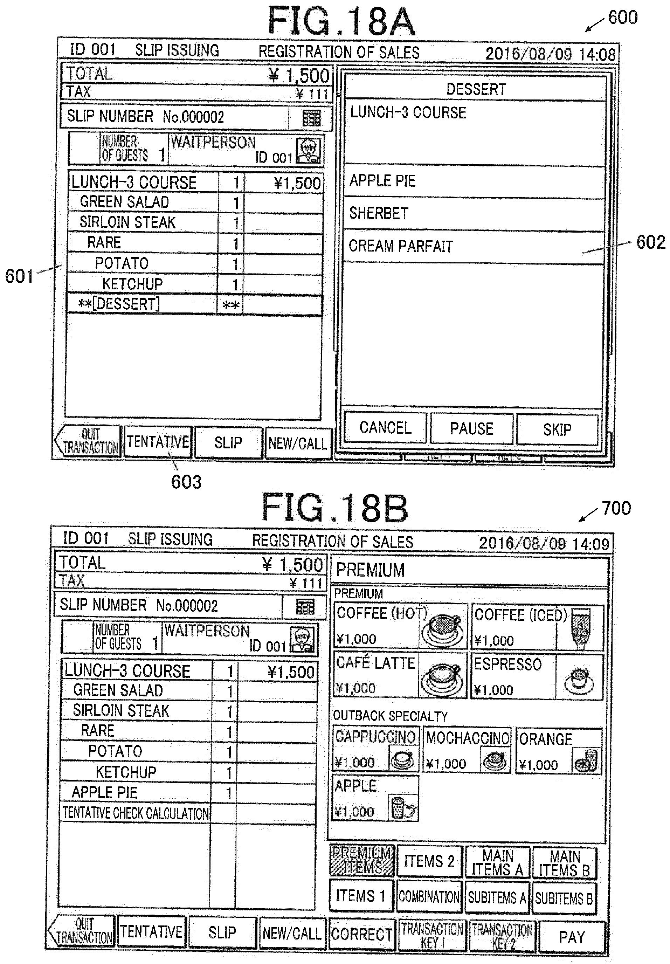

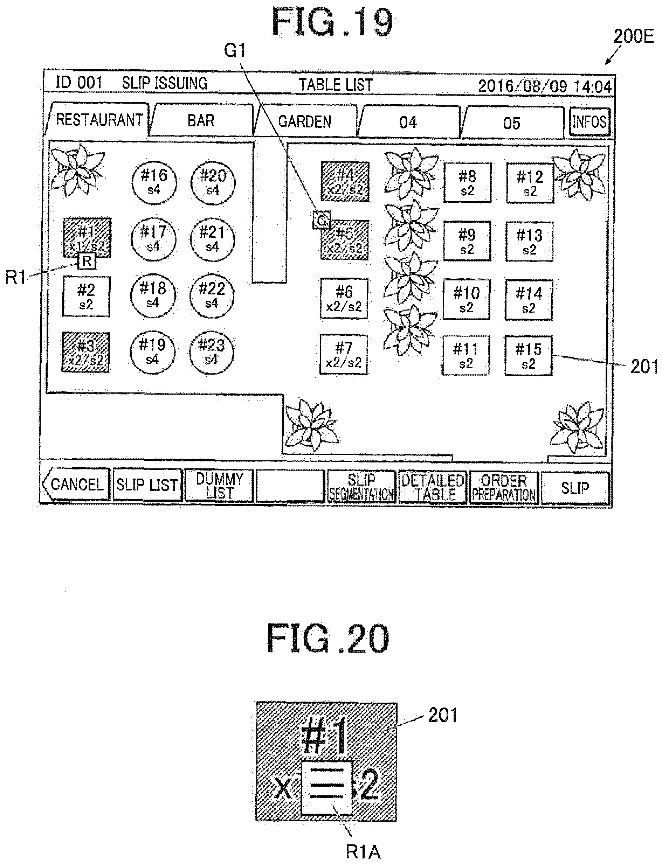

The operation of the order managing system 1 will now be described with reference to Figs. 13 to 20. Fig. 13 is a flow chart illustrating a slip management process. Fig. 14 is a flow chart illustrating a table layout screen display process. Fig. 15 illustrates the detailed slip database 40 after a cooking instruction for pending items. Fig. 16 illustrates a table layout screen 200. Fig. 17A illustrates a registration screen 300 for course meals. Fig. 17B illustrates a table layout screen 200D. Fig. 18A illustrates a registration screen 600 for dessert. Fig. 18B illustrates a registration screen 700 for tentative check calculation. Fig. 19 illustrates a table layout screen 200E. Fig. 20 illustrates a table indicator 201 including a slip mark R1A.

The slip management process executed by the terminal 10 of the order managing system 1 will now be described. The slip management process includes receiving the order information on course meals ordered by guests in the eating place, printing out the order information on the ordered items, receiving the orders of pending items of the course meal, printing out the order information on the pending items, printing out slips, and managing slip information. The main flow of a slip input process is as follows: 1) registration of slip information other than that for pending items; 2) order preparation (cooking instruction) for items other than pending items; 3) change (registration) of slip information on pending items; 4) order preparation (cooking instruction) for pending items; and 5) slip issuing. The order of steps 2) and 3) are interchangeable. The waitperson directs a guest visiting the eating place to a vacant seat and takes orders in advance. In a specific example, one new guest is directed to the table of table number "1" and orders a "three-course lunch," which includes an appetizer, a main dish, and a dessert, as described above. The waitperson directly operates the operation unit 12 of the terminal 10 to input his or her waitperson code.

For example, the instruction for the execution of the slip management process (instruction for display of table layout screen) inputted by the waitperson via the operation unit 12 of the terminal 10 causes the CPU 11 to read the slip management program 153 stored in the storage 15, load this program in the RAM 13, and execute the slip management process in cooperation with the loaded slip management program 153.

With reference to Fig. 13, the CPU 11 executes a table layout screen display process (step S41). The table layout screen display process will now be described in detail with reference to Fig. 14.

With reference to Fig. 14, the CPU 11 reads the table database 50 from the storage 15 and selects one unselected record (step S61). The CPU 11 reads the slip database 30 from the storage 15 and determines whether the table number 51 in the selected record is assigned to the table number 33 to determine whether the table corresponding to the table number 51 is occupied (step S62). If the table is vacant (NO in step S62), the CPU 11 selects white as the display color of the table indicator in the table layout screen for the table corresponding to the selected record in the table database 50, to indicate that the table is vacant (unoccupied) (step S63).

If the table is occupied (YES in step S62), the CPU 11 reads the detailed slip database 40 from the storage 15 and determines whether a parameter of "1" or larger is assigned to the pending registration number 48 in the record of the tentative slip number 41 corresponding to the tentative slip number 31 in the record including the table number 33 in step S62 (indicating an occupied table) and whether an item corresponding to a dish of the course meal is pending (step S64).

If an item is pending (YES in step S64), the CPU 11 assigns gray as the display color of the table indicator in the table layout screen for the table corresponding to the selected record in the table database 50, to indicate that the cooking instruction for all items (characters) of the ordered course meal is not completed (step S65). The CPU 11 adds a pending mark to the table indicator in the table layout screen for the table in the selected record in the table database 50, to indicate the presence of pending items (step S66).

If no pending items are present (NO in step S64), the CPU 11 determines whether "cooking preparation" is assigned to the printer status 47 in the record of the tentative slip number 41 corresponding to the tentative slip number 31 in the record including the table number 33 in step S62 (indicating an occupied table) (step S67). If "cooking preparation" is not assigned (NO in step S67), the CPU 11 assigns black as the display color of the table indicator, to indicate that the cooking instruction for all items of the ordered course meal is completed (step S68). If "cooking preparation" is assigned (YES in step S67), the CPU 11 assigns gray as the display color of the table indicator, to indicate that the cooking instruction is not completed for all items of the ordered course meal (step S69).

After steps S66, S68, and S69, the CPU 11 determines whether a slip has been issued with reference to the slip 38 in the record of the tentative slip number 31 including the table number 33 in step S62 (indicating an occupied table) (step S70). If a slip has been issued (YES in step S70), the CPU 11 adds a slip mark to the table indicator in the table layout screen for the table in the selected record in the table database 50, to indicate that a slip has been issued (step S71).

If a slip is not issued (NO in step S70) or after step S71 is completed, the CPU 11 determines whether a predetermined specified time has elapsed from the serving time 37 with reference to the serving time 37 corresponding to the tentative slip number 31 including the table number 33 in step S62 (indicating an occupied table) (step S72). If the predetermined specified time has elapsed (YES in step S72), the CPU 11 adds a service mark to the table indicator in the table layout screen for the table in the selected record in the table database 50, to urge the waitperson to serve the guest (step S73).

If the predetermined specified time has not elapsed (NO in step S72) or after step S63 or S73 is completed, the CPU 11 determines the presence of an unselected record in the table database 50 in step S61 (step S74). If an unselected record is present (YES in step S74), the CPU 11 carries out step S61. If an unselected record is not present (NO in step S74), the CPU 11 generates the table layout screen information reflecting the setting in steps S63, S65, S66, S68, S69, S71, and S73 on the basis of the table database 50, and displays the table layout screen information on the display 14 (step S75). The CPU 11 then ends the table layout screen display process. The table layout screen information on every record includes parameters of the table number 51, the number of seats 52, and the number of guests 36 indicating the number of seated guests. The table is disposed in the hall at a position corresponding to the coordinate 53.

The table layout screen 200 illustrated in Fig. 16 is an example of a table layout screen based on the table layout screen information. The table layout screen 200 includes table indicators 201 corresponding to all tables disposed in the hall in accordance with a predetermined layout. Each table indicator 201 receives touch input for selection of the corresponding table. Each table indicator 201 includes a table number (#+table number), the number of guests seated at the table (x+number of guests), and the number of seats at the table (s+number of seats). The color of the table indicators 201 indicates different states: white indicates a vacant (unoccupied) table; gray indicates that cooking is not instructed for all items of the ordered course meal (items in the process of cooking preparation or pending items); and black indicates that cooking has been instructed for all items of the ordered course meal. In a specific example of the table layout screen 200, the table indicators 201 for tables corresponding to table numbers "4" and "5" are black, the table indicator 201 for a table corresponding to table number "3" is gray, and the other table indicators 201 are white.

The table layout screen 200 includes an order preparation button 204 and a slip button 205. The order preparation button 204 is operated to input a cooking instruction of an ordered item. The slip button 205 is operated to input an instruction for slip issuing.

Referring back to Fig. 13, after step S41, the CPU 11 receives an input from a waitperson via the operation unit 12 and determines the content of the input operation (step S42). The operation is a touch input of the table indicator 201, the order preparation button 204, or the slip button 205.

If the operation is a touch input of the table indicator 201 for selection of a table (step S42; table selection), the CPU 11 generates initial registration screen information and displays this information on the display 14 (step S43). The displayed initial registration screen information can receive orders of a la carte items, which are not part of a course meal, and instructions for resuming the service for pending items of a course meal. The CPU 11 determines whether a waitperson inputted an instruction for resuming service via the operation unit 12 (step S44).

If an instruction is not input for resuming service of the course meal (NO in step S44), the CPU 11 enters the slip information registration process and receives the item information on the ordered items and the number of guests seated at the table selected in step S42 by the waitperson via the operation unit 12 (step S45). As a specific example, item information of a course meal is inputted. In step S45, the registration screen 300 for a course meal illustrated in Figs. 17A is displayed on the display 14, for example.

The registration screen 300 includes an item list indicator 301 and an item input unit 302. The item list indicator 301 displays a list of item information (item name and quantity corresponding to item code) on the items selected through the item input unit 302. The item input unit 302 includes multiple item buttons for selection of items and receives input of the item information. The registration screen 300 includes switch buttons 303 that are operated to change the buttons in the item input unit 302. The buttons in the item input unit 302, which are appropriately changed through touch input of the switch buttons 303, are operated to input item information on items in different levels, i.e., course meal (such as a three-course lunch), course items (such as appetizer, main dish, dessert) of the course meal, and modifying items (such as doneness of main dish, side dish, sauce) of the course items. At this time, the CPU 11 reads the order character database 60 from the storage 15, can hold the input of the item information on pending items of the character 62 of which the order pending 64 is "YES", and displays the character name of the items in the display color 63 if the inputted item information is to be displayed in the item list indicator 301.

In a specific example, a three-course lunch consisting of a green salad for the appetizer, a sirloin steak cooked rare for the main dish, potatoes for the side dish, and ketchup for the sauce is ordered, and the item information thereof is inputted as illustrated in the item list indicator 301. In this specific case, "pending" is inputted for the dessert. The registration screen 300 displays the number of guests indicator (not shown) to receive input of the number of guests. The registration screen 300 includes a "tentative" button 304 that receives an instruction for tentative check calculation.

The CPU 11 receives an instruction for a tentative check calculation through touch input of the "tentative" button 304 by the waitperson via the operation unit 12 (step S46). The CPU 11 generates a unique tentative slip number for the slip, acquires the current date and time from the clock unit 18, and adds the generated tentative slip number, the table number of the table selected in step S42, the item information (item code, quantity) inputted in step S45, the number of guests, the waitperson code inputted in advance, and the acquired current date and time, to the slip database 30 and the detailed slip database 40 in the storage 15 (step S47). The generated tentative slip number, the inputted table number, the item code, the quantity, the number of guests, the waitperson code, and the acquired current date and time are respectively added to the tentative slip numbers 31 and 41, the table number 33, the item code 42, the quantity 43, the number of guests 36, the waitperson code 35, and the serving time 37, in records corresponding to the respective items.

Preset information corresponding to the item code 42 is assigned to the price 45 and the order character 46 of the added record. "Cooking preparation" is assigned to the printer status 47 of the added record if "YES" is assigned to the order pending 64 of the items in the item code 42, whereas "cooking instruction" is assigned to the printer status 47 of the added record if "NO" is assigned to the order pending 64 of the items in the item code 42. The number of pending items is assigned to the pending registration number 48 of the added record (for example, when one guest orders the three-course lunch and the order of the dessert is pending, "1" is assigned to the pending registration number 48 of the item code 42 for the dessert). If a cooking instruction is inputted before step S46 is completed for the item for which the item information is inputted by the waitperson via the operation unit 12 in step S45, "cooking instruction" is assigned to the printer status 47 of the item, regardless of the order pending 64.

The CPU 11 generates order information on the items other than the pending items inputted in step S45 and sends the generated order information to the printer 20A via the communication unit 16. The printer 20A prints out the order information to instruct "cooking preparation" or "cooking instruction" of the items (step S48). The CPU 11 then ends the slip management process. The order information includes item information including the item code 42 of the item (also including sub-items of the item, if any), the order character 46, the quantity 43, and the instruction information of "cooking preparation" or "cooking instruction," on the basis of the detailed slip database 40. For example, in the case where the appetizer and the main dish of the three-course lunch is inputted in step S45, the printer 20A prints out order information including a cooking instruction for the appetizer corresponding to the order pending 64 to which "NO" is assigned and a cooking preparation instruction for the main dish corresponding to the order pending 64 to which "YES" is assigned, in step S48. Steps S41 to S48 constitute a series of the slip information registration process.

In the case where the order preparation button 204 is operated by touch input to instruct order preparation (step S42; order preparation input), the CPU 11 enters an order preparation process and carries out a process similar to the table layout screen display process in step S41 (step S49). In the order preparation process, the table layout screen 200D illustrated in Fig. 17B is displayed in steps S41 and S49, for example. In the table layout screen 200D, the table indicator 201 of the table number "1" is displayed in gray because, among the items of the three-course lunch, the main dish is in an "order preparation" state and the order of the dessert is pending. In particular, a pending mark H1 is added to the table indicator 201 of the table number "1" because the order of the dessert is pending. The display of the table indicator 201 of the table number "3" has been changed from gray to black. The CPU 11 receives an input for selection of the table indicator 201 by the waitperson on the table layout screen information displayed in step S49 via the operation unit 12 (step S50).

The CPU 11 changes the records of the tentative slip numbers 31 and 41 in the slip database 30 and the detailed slip database 40, respectively, in the storage 15 corresponding to the table number input in step S50 (step S51). In specific, the printer status 47 of the tentative slip number 41 corresponding to the tentative slip number 31 of the inputted table number 33 is changed from "cooking preparation" to "cooking instruction."

The CPU 11 generates order information including the item code 42 of an item changed to "cooking instruction" in step S51 (also including sub-items of the item, if any), the order character 46, the quantity 43, and the instruction information of "cooking preparation" or "cooking instruction," on the basis of the detailed slip database 40. The CPU 11 then sends the generated order information to the printer 20A via the communication unit 16. The printer 20A prints out the order information to instruct the cooking of the item that has been in a cooking preparation state (step S52). The CPU 11 then ends the slip management process.

In step S52, among the items of the ordered three-course lunch, only the order information on the main dish, which is in a cooking preparation state, the doneness of the main dish, the side dish, and the sauce is printed out at the printer 20A, and the printer status 47 of the main dish is changed to "cooking instruction," for example. Steps S41, S42, and S49 to S52 constitute a series of the order preparation process.

If an instruction is inputted for resuming the course (YES in step S44), the CPU 11 enters the slip information change process of the pending items and receives an input of the item information on a pending item ordered by the guest seated at the table selected by the waitperson via the operation unit 12 in step S42 (step S53). In step S53, the registration screen 600 for the pending item, as illustrated in Fig. 18A, appears on the display 14, for example.

The registration screen 600 includes an item list indicator 601 and an item input unit 602. The item list indicator 601 displays a list of item information on ordered items and selected items (item name and quantity of items corresponding to the item code). The item input unit 602 includes multiple item keys that receive input for selection of items. The item input unit 602 receives input of item information.

In a specific example, the registration screen 600 receives an input of item information on the dessert that is a pending item. For example, "apple pie" is selected as the dessert on the item input unit 602 and "apple pie" appears on the item list indicator 601. At this time, the CPU 11 reads the order character database 60 from the storage 15 and displays the name of the character of the item in the display color 63 if the inputted item information is to be displayed in the item list indicator 601. The registration screen 600 includes a "tentative" button 603 for instructing tentative check calculation.

The CPU 11 receives an instruction for tentative check calculation through touch input of the "tentative" button 603 by the waitperson via the operation unit 12 (step S54). In step S54, the registration screen 700 for tentative check calculation illustrated in Fig. 18B is displayed on the display 14, for example.

The CPU 11 acquires the current date and time from the clock unit 18 and changes the slip database 30 and the detailed slip database 40 in the storage 15 with the item information (item code, quantity) inputted in step S53 and the acquired current date and time, with reference to the table number of the table selected in step S42 (step S55). In specific, the serving time 37 in the record of the tentative slip number 31 corresponding to the inputted table number is changed with the acquired current date and time. The item code 42 and the quantity 43 in the record of the pending item of the tentative slip number 41 corresponding to the tentative slip number 31 are respectively changed to the inputted item code and quantity, and the printer status 47 is changed on the basis of the order pending 64. If the waitperson inputs a cooking instruction of the item of which the item information is inputted in step S53 via the operation unit 12 before step S54 is completed, the printer status 47 of the item is changed to "cooking instruction" regardless of the order pending 64.

The CPU 11 generates order information on the item inputted in step S53, sends the generated order information to the printer 20A via the communication unit 16. The printer 20A prints out the order information to instruct "cooking preparation" or "cooking instruction" of the items (step S56). The CPU 11 then ends the slip management process.

The order character 46 of the changed record is changed with preset information corresponding to the item code 42. "Cooking preparation" is assigned to the printer status 47 of the changed record, for example. "None (0)" is assigned to the pending registration number 48 of the changed record. Steps S41 to S44 and S53 to S56 constitute a series of the slip information change process of a pending item.

After the change of the slip information of the pending item, order preparation of the pending item is carried out by repeating steps S41, S42, and S49 to S52 again. Through the process of order preparation of a pending item, the cooking of a pending item for which the slip information is registered is instructed by changing the slip information on the pending item of which the order is on hold. For example, the order information on the cooking instruction of the pending dessert of the three-course lunch is printed out from the printer 20A; the printer status 47 of the order character 46 of the dessert is changed to "cooking instruction"; and the detailed slip database 40 is changed to that illustrated in Fig. 15 after the cooking is instructed for the pending item.

In the case where slip printing is selected through touch input of a slip button 205 (step S42; slip printing input), the CPU 11 carries out slip printing to carry out the table layout screen display process that is the same as that in step S41 (step S57). In step S57, the table layout screen 200D illustrated in Fig. 17B displays the table indicator 201 of the table number "1" in black and has the pending mark H1 deleted, for example.

The CPU 11 receives an input for selection of the table indicator 201 on the table layout screen information displayed in step S57 by the waitperson via the operation unit 12 (step S58). The CPU 11 generates slip information including the table number 33 of the table of the table indicator 201 selected in step S58; the tentative slip number 31, the waitperson code 35, and the number of guests 36 of table number 33; the item code 42, the quantity 43, the price 45, and the order character 46 of the record of the tentative slip number 41 corresponding to the tentative slip number 31. The CPU 11 then sends this information to the printer 20B via the communication unit 16, instructs the printer 20B to print outs a slip, and assigns a parameter to the slip 38 of the selected table number 33 indicating that a slip has been issued (step S59). The CPU 11 then ends the slip management process. Steps S41, S42, and S57 to S59 constitutes a series of the slip printing process.

Upon execution of the slip management process after slip printing, the table layout screen 200E illustrated in Fig. 19 appears on the display 14 in step S41, for example. In the table layout screen 200E, a slip mark R1 indicating that the slip has been issued is added to the table indicator 201 of the table number "1," and a service mark G1 indicating that the predetermined specified time has elapsed after the last service is added to the table indicator 201 of the table number "5."

The slip mark R1 indicating that the slip has been issued for the table indicator 201 in the table layout screen 200E may be replaced with a pseudo slip image as a slip mark R1A, as in Fig. 20. The slip mark R1A appears on the table indicator 201 to indicate that the slip is place on the actual table corresponding to table number "1" of the table indicator 201.

In accordance to this embodiment, the terminal 10 displays a table layout screen that allows confirmation of the progress of the service provided to the guests assigned to the respective tables, selects a table in the table layout screen, issues a slip (check) for the service provided to the selected table, and displays a predetermined slip mark R1 on the table corresponding to the slip in the table layout screen.

Thus, the waitperson can visually confirm the slip marks R1 on the table layout screen to readily grasp the slip issuing, which represent the progress of service provided to the respective tables.

The terminal 10 displays a pseudo slip image as a slip mark R1A appears on a pseudo table image as a table indicator 201 in the table layout screen. Thus, the waitperson can visually confirm the slip mark R1A and intuitively perceive the slip issuing.

The terminal 10 displays a table layout screen that allows confirmation of the progress of the service provided to the guests assigned to the respective tables, selects a table in the table layout screen, issues predetermined instruction information (printing of "cooking instruction" or "cooking preparation") on the service provided to the selected table, changes the state of the table selected in the table layout screen in accordance with the table for which the instruction information is issued, and displays this change (displays the table indicator 201 in a predetermined color (black, gray)).

Thus, the waitperson can visually confirm the state of the table in the table layout screen to readily grasp the progress of the service provided to the respective tables, i.e., whether cooking is instructed for all items of the ordered course meal and the presence of pending items.

In the case where a course meal consisting of multiple items is ordered and one or more items of the course meal are pending, the terminal 10 displays a pending mark H1 indicating a pending item on the table layout screen. Thus, the waitperson can visually confirm the pending mark H1 indicating a state of the table on the table layout screen, to readily grasp progress of the service provided to the respective tables, i.e., the presence of pending items.

The terminal 10 displays a table layout screen that allows confirmation of the progress of the service provided to the guests assigned to the respective tables, selects a table in the table layout screen, determines whether a predetermined time has elapsed after last serving the guest seated at the selected table, and displays a service mark G1 in the table layout screen to urge the waitperson to serve the guest if a predetermined time has elapsed.

Thus, the waitperson can visually confirm the service mark G1 on the table layout screen to readily grasp the progress of the service provided to the respective tables, i.e., the necessity of serving a guest after a predetermined time from the last provided service.

Although a computer readable medium storing programs according to the present invention is not described above, the present invention may be applied to computer readable media including portable recording media, such as a CD-ROM. Carrier waves may also be applied to the present invention as a medium that provides data of the program according to the present invention via a communication line.

The slip information managing devices according to the embodiments of the present invention described above are mere examples, and the present invention should not be limited thereto.

For example, although the pending marks according to the embodiments described above are not distinguished by color, the pending marks may be distinguished by color. For example, the pending marks may be displayed in different colors according to the display color 63 of the character 62 of the pending items depending on the display color of the order character database 60.

In the embodiments described above, any output member may be used other than the printer 20A disposed in the kitchen. For example, the output member may be a display device disposed in the kitchen. The display device may receive order information on unprepared items from the terminal 10 and display this information.

In the embodiments described above, an order managing system 1 includes a terminal 10 installed in an eating place and directly operated by the waitperson to output and input of information. The order managing system 1, however, may have any other configuration. For example, the order managing system 1 may be an order entry system including a wireless communication server, such as a terminal 10, and a handy terminal carried by a waitperson. The waitperson reads and inputs information via the handy terminal.

In the embodiments described above, the table layout screen information is displayed as the table indicators 201 to provide information on vacant tables (display color: white), cooking instructions not completed for all items (display color: gray), and cooking instructions completed for all items (display color: black), and also as the pending marks, slip marks, and service marks. The display of the table layout screen information however may have any other configuration. For example, the table layout screen information may be displayed as the table indicators 201 in different colors or with different marks to indicate vacant tables, cooking instructions not completed for all items, cooking instructions completed for all items, pending items, issued slips, and an elapse of the predetermined time since the last provided service.

The detailed configuration and operation of the components of the order managing system 1 according to the embodiments described above may be appropriately modified without departing from the scope of the present invention.

The embodiments described above should not be construed to limit the present invention, and the claims and other equivalents thereof are included in the scope of the invention.

## Claims

1. An order information managing device (10) comprising:
a display controlling member (11) which causes a display (14) to display one or more tables in a table layout screen (200) as one or more selection keys each for selection of each of the tables;
a managing member (11) which manages order information from a guest assigned to one of the tables by correlating the order information with identification information on the one of the tables to which the guest is assigned (S14), and
manages order information from a guest unassigned to any of the tables by correlating the order information with identification information indicating that the guest is unassigned to any of the tables; and
a controlling member (11) which performs control to activate a selection key, among the selection keys, corresponding to a vacant table among the tables (S11), and to deactivate a selection key, among the selection keys, corresponding to a rest of the tables (S11), when correspondence of the order information with the identification information is changed such that order information managed by the managing member as the order information from the guest unassigned to any of the tables is managed as the order information from the guest assigned to the one of the tables.

2. The order information managing device according to claim 1, wherein when the order information from the guest unassigned to any of the tables is selected and the vacant table is selected by the selection key, the managing member changes the correspondence of the order information with the identification information such that the order information from the guest unassigned to any of the tables is managed as the order information from the guest assigned to the selected table (S28).

3. The order information managing device according to claim 1, wherein the display controlling member causes the display to display a list (500) of the order information from the guest unassigned to any of the tables (S23).

4. The order information managing device according to claim 3, wherein the display controlling member deletes, from the list, the order information from the guest unassigned to any of the tables (S23) when the correspondence of the order information with the identification information is changed such that the selected order information from the guest unassigned to any of the tables is managed as the order information from the guest assigned to a selected table among the tables.

5. The order information managing device according to claim 3, wherein the display controlling member causes the display to display a time elapsed from registration of the order information from the guest unassigned to any of the tables in the list (500) of the order information from the guest unassigned to any of the tables (S23).

6. The order information managing device according to claim 1, wherein a first slip identification number is assigned to the order information from the guest assigned to the one of the tables and a second slip identification number different from the first slip identification number is assigned to the order information from the guest unassigned to any of the tables (S18), and
the managing member changes the second slip identification number to the first slip identification number (S28) when the managing member changes the correspondence of the order information with the identification information such that the order information from the guest unassigned to any of the tables is managed as the order information from the guest assigned to a selected table among the tables.

7. The order information managing device according to claim 1, wherein when the order information from the guest assigned to a selected table among the tables is selected and the vacant table is selected by the selection key, the processor changes the correspondence of the order information with the identification information such that the order information from the guest assigned to the selected table is managed as the order information from the guest assigned to another selected table among the tables (S28).

8. The order information managing device according to claim 1, wherein the display is equipped with a touch panel (12) to receive an instruction from a user through touch input.

9. An order information managing device comprising:
a display controlling member (11) which causes a display (14) to display a table layout screen (200) so as to enable confirming, for each of one or more tables, a progress of a service provided to a guest assigned to one of the tables (S75); and
a slip issuing member (11) to issue a check corresponding to a service provided to a table selected from among the tables in the table layout screen (S59), wherein
the display controlling member causes the display to display a predetermined mark on the table layout screen (200), the predetermined mark corresponding to the table to which the check is issued by the slip issuing member (S71).

10. The order information managing device according to claim 9, wherein the display controlling member causes the display to display the predetermined mark as a pseudo slip image (R1A) disposed on a pseudo table image (201) in the table layout screen (S75).

11. The order information managing device according to claim 9, further comprising:
an instruction information issuing member (11) which issues, when any one of the tables in the table layout screen is selected, predetermined instruction information on the service provided to the selected table, wherein
the display controlling member causes the display to display in the table layout screen the selected table whose form is changed in accordance with the table to which the instruction information is issued by the instruction information issuing member (S63, S65, S66, S69).

12. The order information managing device according to claim 11, wherein when an order of a course meal including a plurality of items is received and there is a pending item among the items of the course meal, the display controlling member causes the display to display a pending mark (H1) on the table layout screen to indicate that the pending item exists (S66).

13. The order information managing device according to claim 11, further comprising:
a determining member (11) which determines, when any one of the tables in the table layout screen is selected, whether a predetermined time has elapsed from a time at which a service is provided to the selected table, wherein
if the determining member determines that the predetermined time has elapsed, the display controlling member causes the display to display a service mark (G1) urging service to be provided to the guest in the table layout screen (S73).

14. A method of managing order information with a device equipped with a display displaying a table layout screen (200), the method comprising the steps of:
causing the display to display one or more tables in the table layout screen (200) as one or more selection keys each for selection of each of the tables (S21);
managing order information from a guest assigned to one of the tables by correlating the order information with identification information on the one of the tables to which the guest is assigned (S14);
correlating order information from a guest unassigned to any of the tables with identification information indicating that the guest is unassigned to any of the tables (S18); and
performing control to activate a selection key, among the selection keys, corresponding to a vacant table among the tables (S11), and to deactivate a selection key, among the selection keys, corresponding to a rest of the tables (S11), when correspondence of the order information with the identification information is changed such that the order information from the guest unassigned to any of the tables is managed as the order information from the guest assigned to the one of the tables.

15. A computer readable storage medium storing a program executable by a computer, the program causing the computer controlling a device equipped with a display (14) displaying a table layout screen (200), to conduct the functions of:
causing the display to display one or more tables in the table layout screen (200) as one or more selection keys each for selection of each of the tables (S21);
managing order information from a guest assigned to one of the tables by correlating the order information with identification information on the one of the tables to which the guest is assigned (S14);
correlating order information from a guest unassigned to any of the tables with identification information indicating that the guest is unassigned to any of the tables (S24); and
performing control to activate a selection key, among the selection keys, corresponding to a vacant table among the tables (S11), and to deactivate a selection key, among the selection keys, corresponding to a rest of the tables (S11), when correspondence of the order information with the identification information is changed such that the order information from the guest unassigned to any of the tables is managed as the order information from the guest assigned to the one of the tables.
